# EUROPÄISCHE PATENTSCHRIFT

(11) **EP 1 493 556 B1**
(45) Veröffentlichungstag und Bekanntmachung des Hinweises auf die Patenterteilung: **24.08.2005**
(21) Anmeldenummer: 03015013.0
(22) Anmeldetag: 02.07.2003
(51) Int. Cl.: B32B 17/06, E06B 5/16, E06B 3/66, C03C 27/06

(54) **Verfahren zur Herstellung einer Brandschutzverglasung**
Process for the manufacture of a fire retardant glazing
Procédé pour la facrication d'un vitrage pare-feu

(43) Veröffentlichungstag der Anmeldung: 05.01.2005
(73) Patentinhaber: Scheuten Glasgroep, 5900 AA Venlo (NL)
(72) Erfinder: Meyer, Gerhard, Prof.Dr., 46483 Wesel (DE); Villari, Valentino, Dr., 41063 Mönchengladbach (DE); Roth, Tobias, 45768 Marl (DE); Wirth, Nikolas, 48249 Dülmen (DE); Fenner, Thomas, 46535 Dinslaken (DE); Hendrikx, Paul, 5802 LE Venray (NL)
(74) Vertreter: Jostarndt, Hans-Dieter

(56) Entgegenhaltungen:
- EP-A- 0 882 573
- EP-A- 1 020 605
- WO-A-01/70495
- DE-A- 1 900 054
- DE-A- 3 509 249

## Beschreibung

Die Erfindung betrifft ein Verfahren zur Herstellung einer Brandschutzverglasung, bestehend aus wenigstens zwei flächigen Substraten und einem transparenten Brandschutzmittel, wobei das Brandschutzmittel aus wenigstens einer Folie oder einem Foliensystem mit wenigstens einer intumeszierenden Schicht besteht, und das Brandschutzmittel zwischen den Substrate eingebracht ist.

Zur Herstellung von Brandschutzverglasungen ist es bekannt, intumeszierende Materialien einzusetzen, welche innerhalb einer Verglasungseinheit mit wenigstens zwei Glasscheiben eine transparente Zwischenschicht bilden, die im Brandfall aufbläht. Beim Aufblähen der Schicht wird eine erhebliche Energiemenge der auftreffenden Hitze von dem in der Schicht enthaltenen Wasser aufgenommen, wodurch das Wasser zum Verdampfen gebracht wird. Nach Verdampfung des Wassers bildet sich ein schaumartiger Hitzeschild, der im weiteren Brandverlauf die Hitzeisolation gegenüber der hinter der Brandschutzschicht liegenden Glasscheibe und einem zu schützenden Raum übernimmt.

Es ist bekannt, derartige Brandschutzschichten durch Hydrogele zu bilden. Hauptbestandteil dieser Hydrogelschichten ist herkömmlicherweise Wasser mit Zumischungen von Salzen und stabilisierenden Polymeren. Die stabilisierenden Polymere dienen dabei als Gelbildner. Eine derartige Brandschutzschicht, bestehend aus einem Hydrogel, ist beispielsweise in der Deutschen Patentschrift DE 35 30 968 beschrieben.

Bei den bekannten Herstellungsverfahren für intumeszierende Schichten für Brandschutzverglasungen erfolgt das Aufbringen des Materials in die Verglasung vorzugsweise durch Aufguss- bzw. Gel- und Gießharzverfahren, bei denen das betreffende Material zwischen zwei auf Abstand gehaltene Scheiben gebracht wird.

Bei Aufgussverfahren wird das intumeszierende Material auf eine Scheibe aufgegossen, woraufhin die zweite Scheibe darüber angebracht wird. Ein derartiges Verfahren ist beispielsweise in der Deutschen Offenlegungsschrift 44 35 843 beschrieben. Dabei wird auf eine waagerecht liegende Glasscheibe ein aus Kitt geformter Ablaufschutzrand aufgebracht, woraufhin auf die Glasplatte eine Brandschutzlösung aufgegossen wird. Das Wasser der Lösung wird durch Trocknungsprozesse entfernt, so dass sich die Schicht zu einer festen Brandschutzschicht verfestigt.

Herkömmliche Aufgussverfahren weisen jedoch verschiedene Nachteile auf. Zur Vermeidung von großen Dicke- und Feuchtegradienten über das Blatt ist beispielsweise ein zeitaufwändiges Justieren der Glasplatten erforderlich. Dies ist insbesondere bei großen Platten ein schwerwiegendes Problem, weil die Handhabung der Glasplatten generell sehr schwierig ist. Beim Trocknen der aufgebrachten Materialien ergeben sich ferner inhomogene Trocknerzustände, die durch Inhomogenitäten in der chemischen Zusammensetzung und der daraus resultierenden physikalischen Eigenschaften in x-, y-und z-Richtung zu nicht unerheblichen Qualitätsproblemen und schlechtem Brandverhalten führen. Die verwendeten Trockner legen zudem die Abmessungen der behandelbaren Platten fest, so dass nur eine sehr eingeschränkte Wahl von Plattengrößen möglich ist. Die Variation der Zusammensetzung des Funktionsmaterials ist ebenfalls eingeschränkt, da der Trocknungsprozess sehr empfindlich ist. Der Trocknungsprozess selbst ist zudem sehr langwierig und schwer kontrollierbar.

Das intumeszierende Brandschutzmaterial kann auch in eine bereits zusammengefügte Doppelglasscheibe gegossen werden, bei der zwei Scheiben vorzugsweise über einen rahmenförmigen Halter auf Abstand positioniert sind. Der sich so bildende Zwischenraum wird mit dem entsprechenden Material ausgegossen. Dies wird beispielsweise in der Deutschen Offenlegungsschrift DE 195 25 263 beschrieben.

Die bekannten Gel- und Gießharzverfahren weisen diverse Nachteile auf. Beispielsweise ist lediglich eine Endmaßfertigung möglich, da nur in vorgefertigte Doppelverglasungen mit Rahmen bestimmter Abmaße gegossen werden kann. Die Konstruktionen sind oftmals sehr dick und weisen ein hohes Gewicht auf. Bei dünneren Schichten bestehen außerdem Probleme bei der Dickentoleranz über größere Abmaße. Durch die Fließfähigkeit des Gels ergeben sich ferner Ausbuchtungen, oder es erfolgt sogar eine Delamination zwischen Gel und Scheibe. Ein großes Problem stellt ferner der Randverschluss dar, der erforderlich ist, um den Bereich des eingegossenen Gels zu begrenzen.

Es besteht daher der Bedarf nach Verfahren zur Herstellung von Brandschutzschichten, bei dem die genannten Nachteile nicht auftreten. Eine wesentliche Verbesserung besteht darin, Brandschutzschichten losgelöst von der Verglasungseinheit herzustellen, in die sie später eingebracht werden sollen. Die Deutsche Patentschrift DE 28 15 900 offenbart beispielsweise ein Verfahren zum Herstellen einer festen Schicht eines intumeszenten Materials, das wasserhaltige oder hydratisierte Metallsalze umfasst, bei dem das Fluidmaterial in eine Form gegossen wird, in der es aushärtet.

In der Deutschen Patentschrift DE 27 52 543 wird ein Verfahren zur Herstellung einer lichtdurchlässigen feuerhemmenden Glasplatte mit wenigstens einer festen Schicht aus hydratisiertem Natriumsilikat beschrieben, wobei die Schicht sandwichartig zwischen zwei Glasscheiben eingeschlossen ist. Die intumeszierende Schicht kann beispielsweise auf der Glasscheibe ausgebildet, als eigene Folie vorgesehen sein oder aus mehreren Schichten bestehen.

Aus der Deutschen Patentschrift DE 35 09 249 ist ein Verfahren zur Herstellung einer transparenten Feuerschutzplatte bekannt. Das Verfahren beinhaltet, dass eine wässrige Lösung eines blähbaren Materials auf einen Träger aufgetragen wird, diese Schicht durch Wärmezufuhr bis auf einen Restwassergehalt von 20-48 Gew.% getrocknet wird und das so erhaltene blähbare Material als mindestens eine Schicht auf wenigstens eine Verglasungsscheibe aufgebracht wird.

Bekannt sind ferner Brandschutzmittel in Form von hybriden Foliensystemen, bei denen wenigstens eine Folie mit intumeszierendem Material beschichtet ist. Derartige Foliensysteme sind beispielsweise durch ein kontinuierliches, kaskadierendes Verfahren herstellbar, bei dem auf eine Basisfolie weitere Folien oder Folienschichten aufgetragen werden.

Derartige Foliensysteme weisen typischerweise wenigstens eine Schicht mit hoher Elastizität auf, so dass das Schichtsystem vorteilhafte mechanische Eigenschaften aufweist und sich gut transportieren, lagern und verarbeiten lässt. Zur Vereinfachung des Einbringens in verschiedene Umgebungen kann das Foliensystem wenigstens eine Klebeschicht aufweisen, mit der es in verschiedene Bauteile einer Verglasungseinheit eingebracht und an diesen fixiert werden kann.

Vorgefertigte Brandschutzfolien oder -foliensysteme weisen somit gegenüber herkömmlichen Brandschutzmitteln diverse Vorteile auf. Ein großer Vorteil liegt insbesondere in der flexiblen Wahl der Größe der zu produzierenden Brandschutzverglasungseinheiten, da die verwendeten Folien in beliebige Größen geschnitten und so verarbeitet werden können. Um dementsprechend große Verglasungseinheiten realisieren zu können, sind jedoch Verfahren zum Einbringen der Brandschutzfolien in eine Verglasungseinheit erforderlich, die an die neuen Gegebenheiten angepasst sind.

Auf dem Gebiet der Herstellung von Verbundsicherheitsglas ist es ebenfalls bekannt, Funktionsfolien in Verglasungseinheiten einzubringen. Dazu beschreiben beispielsweise die Deutsche Patentanmeldung DE 36 15 225 A1 und die Deutsche Patentanmeldung DE 100 02 277 A1 spezielle Verfahren. Jedoch eignen sich die bekannten Verfahren nicht zum effektiven Einbringen von Brandschutzfolien in eine Verglasungseinheit, da an Sicherheitsverglasungen spezifische Anforderungen zu stellen sind, die sich von denen für Brandschutzverglasungen unterscheiden.

Aufgabe der Erfindung ist es daher, ein effektives Verfahren zur Herstellung einer Brandschutzverglasung mit einem Brandschutzmittel in Form einer Folie oder eines Foliensystems bereitzustellen. Das Verfahren soll sich insbesondere zur Herstellung großflächiger Brandschutzverglasungseinheiten eignen.

Erfindungsgemäß wird diese Aufgabe durch die Merkmale des Anspruchs 1 gelöst. Vorteilhafte Weiterbildungen der Erfindung sind Gegenstand der Ansprüche 2 bis 15.

Bei dem erfindungsgemäßen Verfahren zur Herstellung einer Brandschutzverglasung besteht die verwendete Verglasungseinheit aus wenigstens zwei flächigen Substraten und einem transparenten Brandschutzmittel, wobei das Brandschutzmittel aus wenigstens einer Folie oder einem Foliensystem mit wenigstens einer intumeszierenden Schicht besteht. Die Brandschutzfolie wird zwischen die beiden Substrate eingebracht. Das Verfahren ist dadurch gekennzeichnet, dass mehrere Folienabschnitte eines Brandschutzmittels auf ein erstes Substrat aufgebracht werden, wobei die Folienabschnitte die gesamte Fläche des Substrats, welche mit dem Brandschutzmittel versehen werden soll, bedecken. Daraufhin wird ein zweites Substrates auf das erste Substrat mit den Folienabschnitten aufgebracht und bei erhöhtem Druck und erhöhter Temperatur ein Verbundprozess durchgeführt.

Die einzelnen Folienabschnitte werden vorzugsweise so auf das erste Substrat aufgebracht, dass ihre Ränder aneinanderstoßen und/oder sich leicht überlappen. Dabei hat es sich als vorteilhaft erwiesen, die Folienabschnitte an dem ersten Substrat zu fixieren. Dazu kann die Brandschutzfolie beispielsweise mit einer Klebeschicht versehen sein, so dass die Folienabschnitte aufgeklebt werden können.

Für die Klebeschicht können die verschiedene Verbindungsklassen Verwendung finden. Beispielsweise haben sich wasserlösliche organische Bindemittel wie z.B. Polyvinylalkohole, Cellulosederivate, Alkohole und/oder Polyalkohole als vorteilhaft erwiesen. Verwendet werden können außerdem anorganische Bindemittel wie z.B. Wasserglätter mit verschiedenen Modulen und Verdünnungsgraden, Kieselsole und/oder Wasser. In einem besonders bevorzugten Ausführungsbeispiel der Erfindung besteht das Klebemittel aus Glyzerin oder Wasser oder aus Mischungen von beiden. Bevorzugt ist hierbei eine Mischung aus circa 85 % Glyzerin und 15 % Wasser.

Eine weitere Möglichkeit, die Verklebung zwischen Brandschutzfolie und Glassubstrat herzustellen, stellt das Einbringen des Klebemittels in Form von Dampf dar. Als besonders bevorzugtes Ausführungsbeispiel ist dabei Wasserdampf zu nennen.

Der Vorteil von Klebeverfahren besteht unter anderem darin, dass durch ein geeignetes Zusammenbringen der Folie beziehungsweise des Foliensystems, des Klebemittels und des Substrates vermieden werden kann, dass Blasen in diesen Verbund eingeschlossen werden. So kann ein blasenfreier und damit optisch einwandfreier Verbund gebildet werden. Aus diesem Grund ist es ferner zweckmäßig, dass auch beim Aufbringen des zweiten Substrates eine Verklebung beispielsweise in Form einer Klebeschicht zur Anwendung kommt.

Eine weitere Möglichkeit, eine negative Blasenbildung zu vermeiden, stellt der Vakuumverbund dar. Hierbei wird das zu verbindende System im Laminator lose aufeinandergelegt. Anschließend erfolgt eine Evakuierung, wobei die Möglichkeit besteht, das System zu heizen. Im Anschluss wird das System mit Atmosphärendruck unter erhöhter Temperatur belastet, um einen blasenfreien Vorverbund der Substrate mit dem Foliensystem zu erhalten. Anschließend wird ein Verbundprozess bei erhöhtem Druck und erhöhter Temperatur durchgeführt.

Durch den thermoplastischen Charakter der eingesetzten Folien fließen die Stoßkanten während des Verbundprozesses bei erhöhtem Druck und erhöhter Temperatur so ineinander, dass die Stoßkanten im fertigen Produkt nicht mehr sichtbar sind. Über die gesamte Fläche der Brandschutzverglasung ergibt sich demnach eine homogene transparente Brandschutzschicht. Auch die angestrebte Brandschutzwirkung ist über die gesamte Fläche gewährleistet.

Das erfindungsgemäße Verfahren hat den wesentlichen Vorteil, dass großflächige Brandschutzverglasungen hergestellt werden können. Zur Herstellung einer Einheit beispielsweise mit den Standardmaßen der Glasindustrie von 3,21 m x 6,00 m ist es somit nicht erforderlich, eine Brandschutzfolie in der entsprechenden Größe einzusetzen, was zu Problemen bei der Handhabung und der Fixierung führen würde. Vielmehr ist es möglich, die gesamte Fläche durch einzelne Folienabschnitte abzudecken, ohne dass die Qualität der herzustellenden Brandschutzschicht dadurch beeinträchtigt wird. So können auf einfache Weise großflächige Brandschutzverglasungen hergestellt werden. Großflächige Brandschutzgläser haben wiederum den Vorteil, dass aus ihnen durch Zuschneiden kleinere Einheiten in beliebigen Abmessungen und Formen hergestellt werden können.

In einem besonders bevorzugten Ausführungsbeispiel der Erfindung liegt der Druck bei dem durchgeführten Verbundprozess in der Größenordnung von 1-10 bar.
Damit die als Brandschutz wirkende Aufschäumwirkung der Brandschutzfolie nicht schon beim Herstellungsprozess aktiv wird, muss die Temperatur bei dem durchgeführten Verbundprozess unterhalb der Aufschäumtemperatur des Brandschutzmittels liegen. Um eine Verschmelzung der Folienabschnitte zu erreichen, muss die Temperatur jedoch im thermoplastischen Bereich des Brandschutzmittels liegen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele.

In einem besonders bevorzugten Ausführungsbeispiel des erfindungsgemäßen Verfahrens wird zur Herstellung einer Brandschutzverglasung eine Folie bzw. ein Foliensystem zwischen zwei Glasscheiben eingebracht. Als Brandschutzmittel wird eine hybride Brandschutzfolie verwendet. Diese Folie besteht vorzugsweise aus mehreren Schichten, von denen wenigstens eine Schicht intumeszierend ist. In einem weiteren besonders bevorzugten Ausführungsbeispiel der Erfindung wird der Schichtaufbau durch ein drittes Substrat ergänzt.

Ein hybrides Foliensystem kann beispielsweise mit einem kontinuierlichen, kaskadierenden Verfahren hergestellt werden, bei dem zunächst eine Folie oder Folienschicht ausgebracht wird und auf diese eine weitere Folie oder Folienschicht aufgetragen wird, sowie gegebenenfalls eine weitere/weitere Folien und/oder Folienschicht/en aufgetragen wird/werden. Mindestens zwei der Folienschichten sind dabei chemisch unterschiedlich zusammengesetzt, und mindestens eine der Folienschichten ist feuerhemmend.

Unter feuerhemmend versteht man im Sinne dieser Erfindung eine Schicht oder Folie, die in der Lage ist, die Energie eines Feuers zum Schutze dahinterliegender Bauteile oder Gebäudeteile aufzunehmen.

Zur Verbesserung der mechanischen Eigenschaften des Brandschutzmittels ist es vorteilhaft, dass das Foliensystem wenigstens eine Schicht mit hoher Elastizität aufweist. Außerdem hat es sich zur Vereinfachung des Einbringens in verschiedene Umgebungen als zweckmäßig erwiesen, dass das Foliensystem wenigstens eine Klebeschicht zur Einbettung in Umgebungen aufweist.

Eine besonders zweckmäßige Ausführungsform der Erfindung zeichnet sich dadurch aus, dass wenigstens ein Bestandteil des Foliensystems eine silikatische Basis aufweist. Dies hat den Vorteil, dass sich sowohl eine hohe Feuerbeständigkeit als auch gute mechanische Eigenschaften erzielen lassen. Der Einsatz einer silikatischen Basis bewirkt, dass sich bereits bei verhältnismäßig geringen Gehalten organischer Additive eine gewünschte Elastizität des Brandschutzmittels erzielen lässt.

Die Variation verschiedener Eigenschaften innerhalb einer einzelnen Schicht, die beispielsweise als eine Folie laminiert werden kann, hat den Vorteil, dass sich hierdurch die Herstellbarkeit des Brandschutzmittels weiter verbessert. Außerdem ist es hierdurch möglich, unter der Voraussetzung einer geringen Absorption im sichtbaren Bereich, eine hohe Transparenz zu erzielen.

Die Variation der Bestandteile lässt sich sowohl für den Fall einer einzelnen Schicht einsetzen, als auch für den Fall, dass es sich um mehrere, von einander verschiedene Schichten handelt.

Zur Herstellung einer Brandschutzverglasung mit dem erfindungsgemäßen Verfahren werden mehrere Folienabschnitte auf ein erstes Substrat aufgebracht. Bei dem Substrat handelt es sich typischerweise um eine Glasscheibe, es können jedoch auch andere Substratmaterialien zur Anwendung kommen. Mit dem erfindungsgemäßen Verfahren lassen sich insbesondere großflächige Brandschutzeinheiten herstellen, so dass die Abmessungen des Substrates beispielsweise in der Größenordnung der industriellen Standardmaße von Breite B=3,21m x Länge L=6,00m liegen können. Es können jedoch auch kleinere oder größere Substrate verwendet werden.

Die Glasscheibe kann bereits durch verschiedene Prozessschritte vorbearbeitet worden sein, welche zur Herstellung einer gewünschten Verglasungseinheit erforderlich oder vorteilhaft sind. Beispielsweise können Funktionsschichten aufgebracht sein, welche die Transmission der herzustellenden Verglasungseinheit beeinflussen.

Auf dem ersten Substrat wird derjenige Bereich mit Folienabschnitten bedeckt, welcher eine Brandschutzschicht erhalten soll. Die einzelnen Folienabschnitte können in der jeweils erforderlichen Größe hergestellt werden oder aus einer großflächigen Folie herausgeschnitten werden. Das Herstellen aus einer großflächigen Folie hat den Vorteil, dass Abschnitte mit beliebigen Flächen herausgeschnitten werden können.

Es hat sich als besonders vorteilhaft erwiesen, dass die Brandschutzfolie wenigstens auf einer Seite eine Klebeschicht aufweist, so dass die Folienabschnitte einfach auf das erste Substrat aufgebracht und an diesem fixiert werden können. Die Adhäsionskraft der verwendeten Klebeschichten lässt sich dabei zweckmäßigerweise einstellen, so dass eine Anpassung an verschiedene Umgebungsmaterialien wie Glas, Kunststoff oder dergleichen erfolgen kann.

In einem besonders bevorzugten Ausführungsbeispiel der Erfindung werden die Folienabschnitte so auf das Substrat aufgebracht, dass ihre Ränder aneinander stoßen und/oder sich leicht überlappen. Bei dem zur Verschmelzung der Folienabschnitte durchgeführten Verbundprozess verbinden sich die Abschnitte so miteinander, dass die Stoßkanten nicht mehr zu sehen sind und das Erscheinungsbild der Verglasung durch das erfindungsgemäße Herstellungsverfahren nicht beeinträchtigt wird.

Erfindungsgemäß wird auf das erste Substrat mit den Folienabschnitten ein zweites Substrat aufgebracht. Auch dieses Substrat kann durch verschiedene Prozessschritte vorbearbeitet worden sein. Zu den möglichen Prozessschritten zählen auch hier weitere Funktionsschichten. Ferner können weitere Schichten auf die Folienabschnitte aufgebracht werden, bevor das zweite Substrat auf das erste Substrat aufgebracht wird. Das Aufbringen des zweiten Substrates erfolgt vorzugsweise über eine Fixierung der Substrate untereinander. Dabei können beispielsweise mechanische Verbindungen oder Verklebungen zur Anwendung kommen.

Um einen blasenfreien Verbund herzustellen, kann der Substratverbund auch als Vakuumverbund erzeugt werden. Dabei wird das zu verbindende Schichtsystem in einem Laminator lose aufeinander gelegt und anschließend evakuiert. Im Anschluss wird das System vorzugsweise bei Atmosphärendruck unter erhöhter Temperatur belastet und so ein blasenfreier Vorverbund hergestellt, der nun dem eigentlichen Verbundprozess unterzogen werden kann.

Um die einzelnen Folienabschnitte miteinander zu verschmelzen, wird der Schichtaufbau bei erhöhtem Druck und erhöhter Temperatur einem Verbundprozess unterzogen. Dieser Verbundprozess kann beispielsweise in einer Vorrichtung wie einem Autoklaven durchgeführt werden. Die Dauer des Verbundprozesses liegt vorzugsweise in der Größenordnung von 3-6 Stunden. In einem besonders bevorzugten Ausführungsbeispiel der Erfindung dauert der Verbundprozess vier Stunden. Dies beinhaltet beispielsweise eine Aufheizphase von etwa einer Stunde, eine Haltephase von etwa zwei Stunden und eine Abkühlphase von etwa einer Stunde.

Zum Verschmelzen der Folienabschnitte muss die Temperatur beim Verbundprozess im thermoplastischen Bereich liegen. Damit das Brandschutzmittel nicht bereits beim Herstellungsprozess der Verglasung aktiv wird und aufbläht, muss die eingesetzte Temperatur jedoch unterhalb der Aufschäumtemperatur des Brandschutzmittels liegen. Es hat sich als zweckmäßig erwiesen, eine Temperatur zu wählen, die circa 10-20 °C unterhalb der Aufschäumtemperatur des jeweiligen Brandschutzmittels liegt. Es hat sich als zweckmäßig erweisen, dass die Temperatur mindestens 70°C beträgt. Als besonders vorteilhaft haben sich ferner Maximaltemperaturen von höchstens 150°C erwiesen. In einem besonders bevorzugten Ausführungsbeispiel der Erfindung liegt die Temperatur in der Größenordnung von 80-100 °C.

Der Druck liegt bei dem durchgeführten Verbundprozess vorzugsweise in der Größenordnung von 1-10 bar. In einem besonders bevorzugten Ausführungsbeispiel der Erfindung beträgt der Druck 1-2 bar.

Bei dem durchgeführten Verbundprozess verschmelzen die Folienabschnitte miteinander, ohne dass man Stoßkanten zwischen den Abschnitten sieht, und das fertige Produkt weist eine homogene transparente Brandschutzschicht auf. Auch die zu erzielende Brandschutzwirkung ist über die gesamte Fläche gewährleistet.

## Patentansprüche

1. Verfahren zur Herstellung einer Brandschutzverglasung, bestehend aus wenigstens zwei flächigen Substraten und einem Brandschutzmittel, wobei das Brandschutzmittel aus wenigstens einer Folie oder einem Foliensystem mit wenigstens einer intumeszierenden Schicht besteht, und das Brandschutzmittel zwischen den Substraten eingebracht ist, **gekennzeichnet durch** folgende Schritte:
- Aufbringen mehrerer Folienabschnitte des Brandschutzmittels auf ein erstes Substrat, wobei die Folienabschnitte die gesamte Fläche des Substrates, welche mit dem Brandschutzmittel versehen werden soll, bedecken,
- Aufbringen eines zweiten Substrates auf das erste Substrat mit den Folienabschnitten,
- Durchführen eines Verbundprozesses bei erhöhtem Druck und erhöhter Temperatur.

2. Verfahren nach Anspruch 1, **dadurch gekennzeichnet, dass** mehr als zwei Substrate zu einer Brandschutzverglasung verarbeitet werden.

3. Verfahren nach einem oder beiden der Ansprüche 1 und 2, **dadurch gekennzeichnet, dass** die Ränder der Folienabschnitte nach dem Aufbringen auf das erste Substrat aneinander stoßen und/oder sich leicht überlappen.

4. Verfahren nach einem oder mehreren der vorangegangenen Ansprüche, **dadurch gekennzeichnet, dass** die Substrate und die Folienabschnitte in einem Laminator in dem gewünschten Schichtaufbau aufeinandergelegt und evakuiert werden, woraufhin das System mit Atmosphärendruck unter erhöhter Temperatur belastet wird, um einen Vorverbund zu erzeugen.

5. Verfahren nach einem oder mehreren der vorangegangenen Ansprüche, **dadurch gekennzeichnet, dass** die Folienabschnitte auf dem ersten und/oder zweiten Substrat fixiert werden.

6. Verfahren nach Anspruch 5, **dadurch gekennzeichnet, dass** die Folienabschnitte mit dem ersten und/oder zweiten Substrat verklebt werden.

7. Verfahren nach Anspruch 6, **dadurch gekennzeichnet, dass** als Verklebung wasserlösliche organische Bindemittel verwendet werden.

8. Verfahren nach Anspruch 7, **dadurch gekennzeichnet, dass** als Verklebung Polyvinylalkohole, Cellulosederivate, Alkohole und/oder Polyalkohole verwendet werden.

9. Verfahren nach Anspruch 6, **dadurch gekennzeichnet, dass** als Verklebung anorganische Bindemittel verwendet werden.

10. Verfahren nach Anspruch 9, **dadurch gekennzeichnet, dass** als Verklebung Wasserglätter mit verschiedenen Modulen und Verdünnungsgraden, Kieselsole und/oder Wasser verwendet werden.

11. Verfahren nach Anspruch 6, **dadurch gekennzeichnet, dass** als Klebemittel Glyzerin oder Wasser oder Mischungen aus diesen verwendet werden.

12. Verfahren nach Anspruch 11, **dadurch gekennzeichnet, dass** das Mischungsverhältnis von Glyzerin zu Wasser in der Größenordnung von 85 % Glyzerin zu 15 % Wasser liegt.

13. Verfahren nach einem oder mehreren der vorangegangenen Ansprüche, **dadurch gekennzeichnet, dass** zwischen das erste und das zweite Substrat weitere Funktionsschichten eingebracht werden.

14. Verfahren nach einem oder mehreren der vorangegangenen Ansprüche, **dadurch gekennzeichnet, dass** der Druck bei dem durchgeführten Verbundprozess in der Größenordnung von 1-10 bar liegt.

15. Verfahren nach Anspruch 14, **dadurch gekennzeichnet, dass** der Druck bei dem durchgeführten Verbundprozess 1-2 bar beträgt.

16. Verfahren nach einem oder mehreren der vorangegangenen Ansprüche, **dadurch gekennzeichnet, dass** die Temperatur bei dem durchgeführten Verbundprozess im thermoplastischen Bereich des Brandschutzmittels und unterhalb der Aufschäumtemperatur des Brandschutzmittels liegt.

17. Verfahren nach Anspruch 16, **dadurch gekennzeichnet, dass** die Temperatur bei dem durchgeführten Verbundprozess 10-20 °C unterhalb der Aufschäumtemperatur des Brandschutzmittels liegt.

18. Verfahren nach einem oder mehreren der vorangegangenen Ansprüche, **dadurch gekennzeichnet, dass** die Temperatur bei dem durchgeführten Verbundprozess mindestens 70°C beträgt.

19. Verfahren nach einem oder mehreren der vorangegangenen Ansprüche, **dadurch gekennzeichnet, dass** die Temperatur bei dem durchgeführten Verbundprozess mindestens 80°C beträgt.

20. Verfahren nach einem oder mehreren der vorangegangenen Ansprüche, **dadurch gekennzeichnet, dass** die Temperatur bei dem durchgeführten Verbundprozess höchstens 100°C beträgt.

21. Verfahren nach einem oder mehreren der Ansprüche 1 bis 19, **dadurch gekennzeichnet, dass** die Temperatur bei dem durchgeführten Verbundprozess höchstens 150°C beträgt.

22. Verfahren nach einem oder mehreren der vorangegangenen Ansprüche, **dadurch gekennzeichnet, dass** die Dauer des durchgeführten Verbundprozesses in der Größenordnung von 3-6 Stunden liegt.

23. Verfahren nach Anspruch 22, **dadurch gekennzeichnet, dass** die Dauer des durchgeführten Verbundprozesses 4 Stunden beträgt.

24. Verfahren nach Anspruch 23, **dadurch gekennzeichnet, dass** sich der durchgeführte Verbundprozess in eine Aufheizphase von etwa einer Stunde, eine Haltephase von etwa zwei Stunden und eine Abkühlphase von etwa einer Stunde unterteilt.

25. Verfahren nach einem oder mehreren der vorangegangenen Ansprüche, **dadurch gekennzeichnet, dass** die Abmessungen der Substrate in der Größenordnung von Breite B=3,21m und Länge L=6,00m liegen.

## Claims

1. A method for the production of fire protection glazing, consisting of at least two flat substrates and one fire protection means, whereby the fire protection means consists of at least one film or of a film system having at least one intumescent layer, and the fire protection means is introduced between the substrates, **characterized by** the following steps:
- applying several film sections of the fire protection means onto a first substrate, whereby the film sections cover the entire surface of the substrate that is to be provided with the fire protection means,
- applying a second substrate onto the first substrate with the film sections,
- carrying out a laminating process at elevated pressure and elevated temperature.

2. The method according to Claim 1, **characterized in that** more than two substrates are made into fire protection glazing.

3. The method according to one or both of Claims 1 and 2, **characterized in that** the edges of the film sections abut each other and/or overlap slightly after being applied onto the first substrate.

4. The method according to one or more of the preceding claims, **characterized in that** the substrates and the film sections are laid on top of each other in the desired layer structure in a laminator and then evacuated, after which the system is charged with atmospheric pressure under elevated temperature in order to create a pre-laminate.

5. The method according to one or more of the preceding claims, **characterized in that** the film sections are fixed onto the first and/or second substrate.

6. The method according to Claim 5, **characterized in that** the film sections are glued to the first and/or second substrate.

7. The method according to Claim 6, **characterized in that** water-soluble organic binder is used for the adhesion process.

8. The method according to Claim 7, **characterized in that** polyvinyl alcohols, cellulose derivatives, alcohols and/or polyalcohols are used for the adhesion process.

9. The method according to Claim 6, **characterized in that** inorganic binders are used for the adhesion process.

10. The method according to Claim 9, **characterized in that** wetting agents having different moduli and degrees of dilution, silicic sols and/or water are used for the adhesion process.

11. The method according to Claim 6, **characterized in that** glycerin or water or mixtures thereof are used as the adhesive.

12. The method according to Claim 11, **characterized in that** the mixing ratio of glycerin to water is in the order of magnitude of 85% glycerin to 15% water.

13. The method according to one or more of the preceding claims, **characterized in that** additional functional layers are introduced between the first substrate and the second substrate.

14. The method according to one or more of the preceding claims, **characterized in that** the pressure during the laminating process is in the order of magnitude of 1 to 10 bar.

15. The method according to Claim 14, **characterized in that** the pressure during the laminating process is in the order of magnitude of 1 to 2 bar.

16. The method according to one or more of the preceding claims, **characterized in that** the temperature during the laminating process lies in the thermoplastic range of the fire protection means and below the foaming temperature of the fire protection means.

17. The method according to Claim 16, **characterized in that** the temperature during the laminating process lies 10°C to 20°C [18°F to 36°F] below the foaming temperature of the fire protection means.

18. The method according to one or more of the preceding claims, **characterized in that** the temperature during the laminating process is at least 70°C [158°F].

19. The method according to one or more of the preceding claims, **characterized in that** the temperature during the laminating process is at least 80°C [176°F].

20. The method according to one or more of the preceding claims, **characterized in that** the temperature during the laminating process is at the maximum 100°C [212°F].

21. The method according to one or more of Claims 1 to 19, **characterized in that** the temperature during the laminating process is at the maximum 150°C [302°F].

22. The method according to one or more of the preceding claims, **characterized in that** the duration of the laminating process is in the order of magnitude of 3 to 6 hours.

23. The method according to Claim 22, **characterized in that** the duration of the laminating process is four hours.

24. The method according to Claim 23, **characterized in that** the execution of the laminating process is divided into a heating phase of about one hour, a retention phase of about two hours and a cooling phase of about one hour.

25. The method according to one or more of the preceding claims, **characterized in that** the dimensions of the substrate are in the order of magnitude of a width B = 3.21 meters and a length L = 6.0 meters.

## Revendications

1. Procédé pour la production d'un vitrage coupe-feu, composé d'au moins deux substrats plans et d'un moyen coupe-feu, lequel consiste en au moins une feuille ou un système de feuilles avec au moins une couche intumescente, et lequel est introduit entre les substrats, ,
**caractérisé par** les étapes suivantes:
- Application de plusieurs parties de feuilles du moyen coupe-feu sur un premier substrat, tel que les parties de feuilles couvrent la surface totale du substrat, laquelle doit être munie du le moyen coupe-feu,
- Application d'un deuxième substrat sur le premier substrat avec les parties des feuilles,
- Exécution d'un processus de laminage à une pression élevée et à une température élevée.

2. Procédé selon la revendication 1,
**caractérisé en ce que**
plus de deux substrats sont façonnés en un vitrage coupe-feu.

3. Procédé selon une ou deux des revendications 1 et 2,
**caractérisé en ce que**
les bords des parties de feuilles se rejoignent et/ou se recouvrent légèrement après l'application sur le premier substrat.

4. Procédé selon une ou plusieurs des revendications précédentes,
**caractérisé en ce que**
les substrats et les parties de feuilles sont positionnés l'un sur l'autre selon la structure de couches souhaitée dans un lamineur et sont évacués, après quoi on applique une charge au système sous une pression atmosphérique à une température élevée pour produire un prélaminé.

5. Procédé selon une ou plusieurs des revendications précédentes,
**caractérisé en ce que**
les parties de feuilles sont fixées sur le premier et/ou le deuxième substrat.

6. Procédé selon la revendication 5,
**caractérisé en ce que**
les parties des feuilles sont collées sur le premier et/ou le deuxième substrat.

7. Procédé selon la revendication 6,
**caractérisé en ce que**
on utilise pour le collage des adhésifs organiques hydrosolubles.

8. Procédé selon la revendication 7,
**caractérisé en ce que**
on utilise pour le collage des alcools polyvinyliques, des dérives de cellulose, des alcools et/ou des polyalcools.

9. Procédé selon la revendication 6,
**caractérisé en ce que**
on utilise pour le collage des adhésifs anorganiques.

10. Procédé selon la revendication 9,
**caractérisé en ce que**
on utilise pour le collage des agents mouillant avec des modules différents et des degrés de dilution différents, des solutions d'acide silicique la saumure siliceux et/ou de l'eau.

11. Procédé selon la revendication 6,
**caractérisé en ce que**
on utilise comme colle de la glycérine ou de l'eau ou des mélanges de celles-ci.

12. Procédé selon la revendication 11,
**caractérisé en ce que**
le rapport entre la de glycérine et l'eau dans le mélange est de l'ordre de grandeur de 85% de glycérine pour 15% d'eau.

13. Procédé selon une ou plusieurs des revendications précédentes,
**caractérisé en ce que**
on introduit entre le premier et le deuxième substrat des couches fonctionnelles supplémentaires.

14. Procédé selon une ou plusieurs des revendications précédentes,
**caractérisé en ce que**
la pression pendant le processus de laminage exécuté est de l'ordre de grandeur de 1 - 10 bar.

15. Procédé selon la revendication 14,
**caractérisé en ce que**
la pression pendant le processus de laminage exécuté est de 1 - 2 bar.

16. Procédé selon une ou plusieurs des revendications précédentes,
**caractérisé en ce que**
la température pendant le processus de laminage exécuté se trouve dans le domaine thermoplastique du moyen coupe-feu et sous la température de moussage du moyen coupe-feu.

17. Procédé selon la revendication 16,
**caractérisé en ce que**
la température pendant le processus le laminage exécuté est inférieure 10 - 20 C à la température de moussage du moyen coupe-feu.

18. Procédé selon une ou plusieurs des revendications précédentes,
**caractérisé en ce que**
la température pendant le processus de laminage exécuté est d'au moins 70 C.

19. Procédé selon une ou plusieurs des revendications précédentes,
**caractérisé en ce que**
la température pendant le processus de laminage exécuté est d'au moins 80 C.

20. Procédé selon une ou plusieurs des revendications précédentes,
**caractérisé en ce que**
la température pendant le processus de laminage exécuté est de 100 C au maximum.

21. Procédé selon une ou plusieurs des revendications 1 à 19,
**caractérisé en ce que**
la température pendant le processus de laminage exécuté est de 150 C au maximum.

22. Procédé selon une ou plusieurs des revendications précédentes,
**caractérisé en ce que**
la durée du processus de laminage exécuté est de l'ordre de grandeur de 3 - 6 heures.

23. Procédé selon la revendication 22,
**caractérisé en ce que**
la durée du processus de laminage exécuté est de 4 heures.

24. Procédé selon la revendication 23,
**caractérisé en ce que**
le processus de laminage exécuté se divise en une phase d'échauffement d'environ une heure, une phase d'arrêt d'environ deux heures et une phase de refroidissement d'environ une heure.

25. Procédé selon une ou plusieurs des revendications précédentes,
**caractérisé en ce que**
les dimensions des substrats sont de l'ordre de grandeur de B= 3,21m de largeur B= 3,21m et de longueur L= 6,00m.
